# EUROPEAN PATENT APPLICATION

(11) **EP 1 524 212 A1**
(43) Date of publication of application: **20.04.2005**
(21) Application number: 04024247.1
(22) Date of filing: 12.10.2004
(51) Int. Cl.: B65G 25/06

(54) **Reciprocating floor conveyor for the cargo space of a vehicle**

(30) Priority: 16.10.2003 NL 1024558; 23.04.2004 NL 1026018
(71) Applicant: Hyva International B.V., 2400 AH Alphen aan de Rijn (NL)
(72) Inventor: Biemond, Jacob, 2411 JZ Bodegraven (NL)
(74) Representative: Uittenbogaart, Gustaaf Adolf

(57) **Abstract**

The invention relates to a loading device for a loading platform of a vehicle comprising floorboards (4) movable to and fro over crossbeams (6) in groups while displacing the load over a distance and stationary supports (13) for supporting the floorboards (4) and a contact plane (12) between the floorboard (4) and a stationary support (13), in which guard means (17) are fitted to protect the contact plane (12) against splashing dirt.

## Description

The invention relates to a loading device according to the preamble of Claim 1. Loading devices of this type are known, for example from EP-A 1332988. When used in the loading floor of a lorry, the known loading device has the drawback that the underside of the floorboards may be soiled with sand and mud while driving on the road and/or sandy roads and may also get wet. As a result of the floorboards being moved to and fro during loading and unloading, this dirt ends up between the floorboards and the stationary supports, where it causes wear. As a result of this wear, it may be necessary to renew the floorboards regularly which leads to additional costs.

In order to prevent this wear, the loading device is designed according to the feature of Claim 1. As a result of installing guard means, the contact face gets less dirty and/or wet and there will be less wear of the floorboards.

In accordance with an improvement, the loading device is designed according to Claim 2. In this embodiment, short contact planes are provided above the stationary supports which are effectively protected against dirt by the splash guards.

In accordance with one embodiment, the loading device is designed according to Claim 3. This ensures soiling of the underside of the floorboards is prevented.

In accordance with one embodiment, the loading device is designed according to Claim 4. This ensures soiling of the underside of the floorboards is prevented further.

In accordance with one embodiment, the loading device is designed according to Claim 5. This ensures that the underside of the floorboard is protected against soiling over a sufficient distance.

In accordance with one embodiment, the loading device is designed according to Claim 6. This ensures that the stationary support with splash guard can be manufactured in a simple manner with suitably matched dimensions.

In accordance with one embodiment, the loading device is designed according to Claim 7. This allows a support for the floorboards to be produced in a simple manner which protects the underside of the floorboard over its entire length.

In accordance with one embodiment, the loading device is designed according to Claim 8. In this way, a solid floor with high load-bearing capacity, in which the underside of the floorboard is protected over its entire length, is provided in a simple manner.

In accordance with one embodiment, the loading device is designed according to Claim 9. In this way, installing the floorboards over the plastic profiled section is relatively simple while a good seal is ensured at the same time.

In accordance with one embodiment, the loading device is designed according to Claim 10. In this way, the plastic profiled section is prevented in a simple manner from sliding over the stationary supports.

In accordance with one embodiment, the loading device is designed according to Claim 11. In this way, the sliding piece can be attached to the supporting beam in a simple manner.

In accordance with one embodiment, the loading device is designed according to Claim 12. In this way, the plastic component can be produced quickly and with little distortion.

In accordance with one embodiment, the loading device is designed according to Claim 13. In this way, the mould for producing the plastic component can be constructed in a simple manner, while the apertures in the plastic produce a saving in material.

The invention will be explained below with reference to a number of exemplary embodiments of the loading device with the aid of a drawing, in which:
Figure 1 shows a perspective view of a vehicle with a loading device according to the invention,
Figure 2 shows a rear view of the loading platform of the vehicle of Figure 1,
Figure 3 shows a longitudinal section III-III of a first embodiment of a sliding piece of the loading device,
Figure 4 shows a cross section IV-IV of the sliding piece of Figure 3,
Figure 5 shows a perspective plan view of the sliding piece of Figure 3,
Figure 6 shows a cross section of a floorboard according to a second embodiment of the loading device,
Figure 7 shows a cross section of a floorboard according to a third embodiment of the loading device,
Figure 8 shows a cross section of a floorboard according to a fourth embodiment of the loading device,
Figure 9 shows a cross section of a floorboard according to a fifth embodiment of the loading device,
Figure 10 shows a longitudinal section X-X of a sixth embodiment of the loading device, and
Figure 11 shows a cross section XI-XI of the sixth embodiment of the loading device.

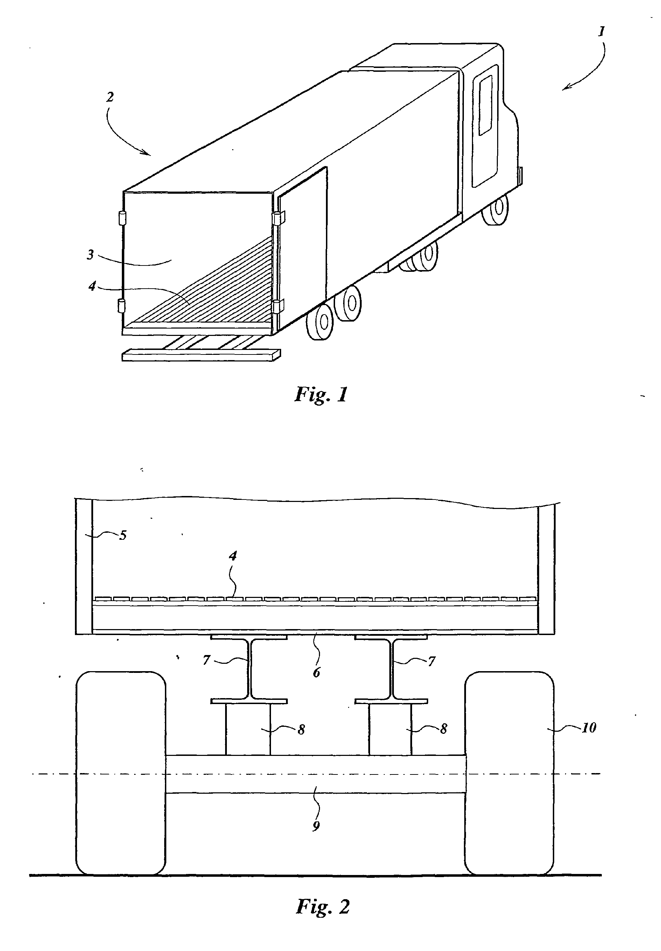

Figure 1 shows a tractor unit 1 with a semitrailer 2. The semitrailer 2 has a loading platform 3 having a floor comprising floorboards 4. As shown in Figure 2, the floorboards are supported by a number of crossbeams 6 which are situated on two londitudinal beams 7. The longitudinal beams 7 are supported by springs 8 which rest on an axle 9 and wheels 10.

The floorboards 4 are moved to and fro in groups over a distance s by means of hydraulic cylinders (not shown) which are described inter alia in European patent application EP-A 1332988. The load is displaced if all groups of floorboards 4 are simultaneously moved in the same direction from a starting position. Subsequently, the floorboards 4 are returned to their starting position by moving a first group of floorboards 4, for example comprising one third of the number of floorboards 4, to the starting position and then, one after the other, moving the second and third groups to the starting position. Then, all groups are moved simultaneously out of the starting position again as a result of which the load moves ahead one step. The floorboards 4 rest on sliding pieces to be discusssed below, which are generally made from plastic. The illustrated loading device can be used for loading and unloading parcel goods, for example pallets, and also for loading and unloading bulk material. As transportation takes place over surfaced and unsurfaced roads, the underside of the floorboards 4 can become very dirty.

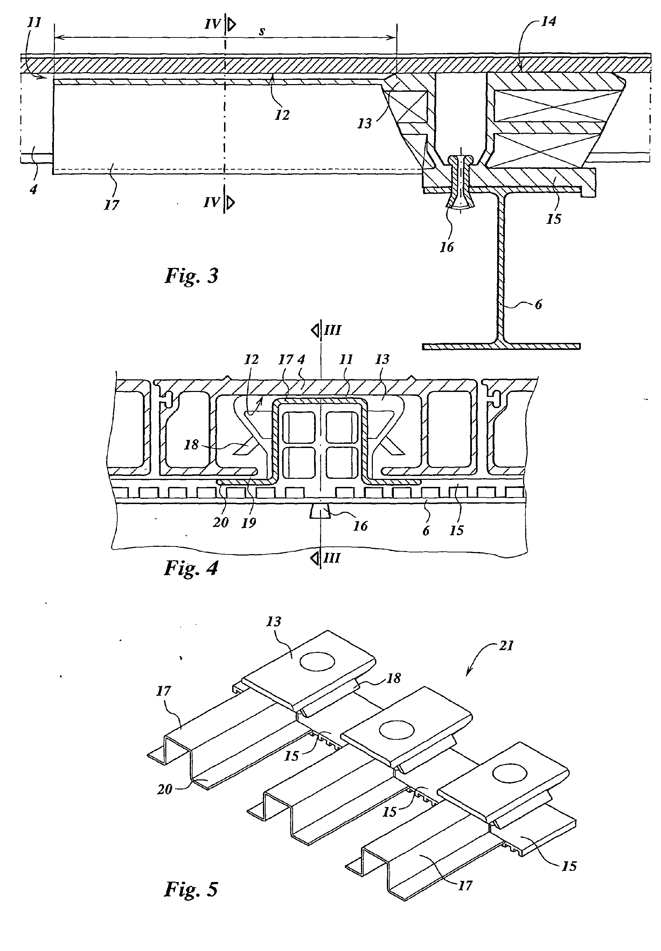

Figures 3, 4 and 5 show sliding pieces 13 for supporting floorboards 4 which are provided with a splash guard 17. This splash guard 17 prevents a contact plane 12 on the underside of the floorboard 4, which moves over a supporting plane 14 of the sliding piece 13 over a distance s, from becoming soiled by dirt splashing up from the road. To this end, the splash guard 17 is designed, at its end remote from the sliding piece 13, with a gap 11 which functions as an air gap seal and which prevents dirt splashing up in the longitudinal direction from hitting the contact plane 12. The splash guard 17 is provided with lips 20 at the sides which seal with a gap 19 in the longitudinal direction against the underside of the floorboard 4 and thus prevent dirt splashing up from the side from hitting the contact plane 12. In order to prevent the ends of the floorboards 4 from bouncing up as a result of the load, retainers 18 have been installed on the sliding piece 13. In the embodiment shown, use has been made of air gap seals, as a result of which the floorboards 4 do not experience any additional resistance due to the seals during movement to and fro. If desired, the seals may also comprise lips which rest against the floorboard 4.

The sliding piece 13, which is preferably made from a plastic suitable for the purpose, is attached, together with two other sliding pieces 13, to a common base 15 to form an assembly 21. The assembly 21 is attached to the crossbeam 6 by means of rivets 16. This embodiment with three sliding pieces 13 is based on the fact that the floorboards 4 can move in three groups by means of three hydraulic cylinders, the number of floorboards 4 in each case being a multiple of three. In embodiments with more or fewer groups, or for other reasons, more or fewer sliding pieces 13 may be combined to form an assembly 21.

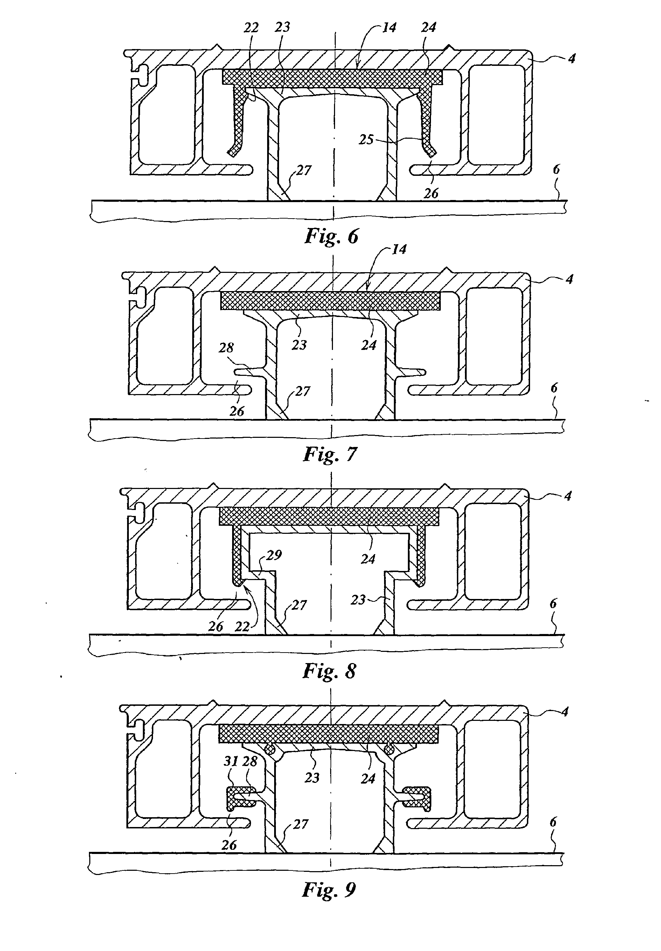

Figure 6 shows an embodiment, in which a longitudinal beam 23 is arranged over the crossbeams 6 under each floorboard 4. This longitudinal beam 23 extends over the entire length of the loading floor, and is optionally interrupted in some places for the installation of the hydraulic cylinders used to move the floorboards 4 to and fro. The longitudinal beam 23 is, for example, attached to the crossbeams 6 by means of a welded joint 27. Over the entire length of the longitudinal beam 23, at the upper side thereof, a sliding profiled section 24 is attached by clamping using a snap closure 22. The upper side of the sliding profiled section 24, over the entire length of the longitudinal beam 23, forms a supporting plane 14 under the floorboard 4 so that no surface is freely accessible to splashing dirt and the underside of the floorboard 4 cannot be soiled by splashing dirt. If desired, additional guard features may be provided at the end of the longitudinal beam 23 over the distance s to prevent the parts of the underside of the floorboard 4 protruding beyond the longitudinal beam 23 from becoming soiled. In order to prevent dirt from splashing against the underside of the floorboard 4 on the side next to the sliding profiled section 24, an air gap seal 26 is formed on both sides which is formed by a part of the floorboard 4 and a lip 25 on the sliding profiled section 24. The lip 25 with snap closure 22 also prevents the floorboard 4 from bouncing up.

Figure 7 shows another embodiment of the design from Figure 6. In this case, the sliding profiled section 24 is designed as a flat panel which is attached to the longtitudinal beam 23 with adhesive or rivets. The air gap seal 26 is formed by a lip 28 which forms part of the profiled section of the longitudinal beam 23. As a result, the sliding profiled section 24 can be produced more easily.

Figure 8 shows another adaptation of the design from Figure 6. In this case, the snap closure 22 of the sliding profiled section 24 is mounted around a rib 29 which is fitted in the side walls of the longitudinal profiled section 23. As a result, the gap 26 between the floorboard 4 and the sliding profiled section 24 is tall and narrow, which efficiently prevents dirt from getting in. In addition, the rib 29 forms a solid stop which prevents the floorboard 4 from bouncing up.

Figure 9 shows an adaptation of the design from Figure 7. The sliding profiled section 24 is provided with a lip which, together with a groove 30, forms a clamping construction in the longitudinal profiled section 23 for attaching the sliding profiled section 24. If desired, the groove may be provided in the sliding profiled section 24 and the longitudinal profiled section 23 is provided with the lip. For sealing, use is made of separate profiled sections 31 which are clamped on the lip 28 of the longitudinal profiled section 23 and form a gap 26 with the floorboard 4. If desired, the sliding profiled section 24 may be made from a different plastic which has special sliding properties. The profiled section 31 can then be made from a relatively cheap material. It will be clear to those skilled in the art that combinations of the embodiments described above may also be employed.

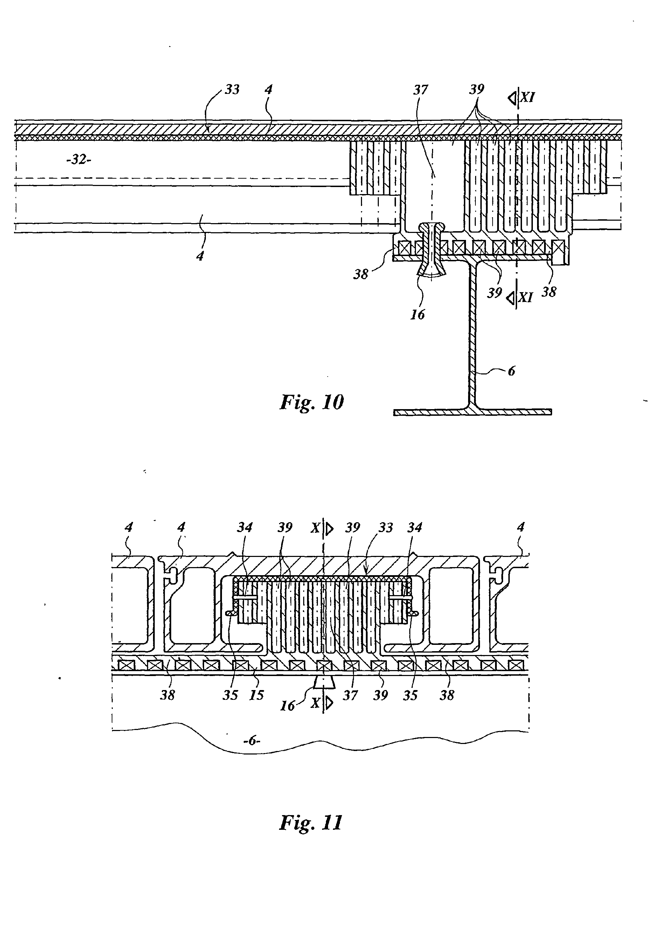

Figures 10 and 11 show an embodiment, in which a number of supports 37 are combined to form a plastic component and are mounted on the crossbeam 6 by means of a base 38 in the manner described above with the aid of rivets 16. Plastic profiled sections 32 are fitted on the supports 37 in the longitudinal direction of the loading space 3, with the upper side of each plastic profiled section 32 supporting the underside of the floorboard 4 with a sliding plane 33. The plastic profiled sections 32 are attached to the supports 37 by screws 34, such as particleboard screws or self-tapping screws, so that sliding in the longitudinal direction is prevented. The screws 34 are preferably fitted at the side of the support 37 so that the sliding plane 33 can remain free from the heads of the screws 34. The plastic profiled section 32 may also be attached to the support 37 by means of adhesive rather than screws 34. In the region of the sliding plane 33, the floorboards 4 can slide over the plastic profiled sections 32 and are supported by the crossbeam 6 at the location of the support 37. The plastic profiled sections 32 have a sealing lip 35 which, with the floorboard 4, forms a gap 36 and ensures that no dirt can get between the floorboard 4 and the plastic profiled section 32 or to the sliding plane 33 from underneath. During installation of the floorboard 4 over the plastic profiled section 32, the sealing lips 35 provide guidance for the floorboards 4, while, due to the elasticity of the sealing lip 35, little resistance is generated when the floorboard 4 slides over the plastic profiled section 32. The uninterrupted length of the plastic profiled section 32 also prevents dirt from reaching the sliding plane 33.

The plastic support 37 is provided with apertures 39 which are positioned in such a manner that the plastic between the apertures 39 has a more or less constant wall thickness throughout. This makes it easier to produce the component by injection-moulding as the dissipation of heat during curing takes place more evenly. The walls of the apertures 39 are more or less parallel as a result of which the cores present during injection-moulding can be pulled from the cured component in a simple manner. This makes it possible to make the design of the mould simpler.

## Claims

1. Loading device for a loading platform (3) of a vehicle comprising crossbeams (6), floorboards (4) movable to and fro over the crossbeams in groups over a distance (s) and stationary supports (13;23,24;37) located on the crossbeams for supporting the floorboards and a contact plane (12,14;33) between the movable floorboard and the stationary support, **characterized in that** guard means (17;24;32) are fitted to protect the contact plane (12,14;33) against splashing dirt.

2. Loading device according to Claim 1, in which the upper side of the stationary support (13) forms the contact plane (12) and the guard means comprise a splash guard (17) which is attached near the contact plane on the stationary support.

3. Loading device according to Claim 2, in which the splash guard (17), with the end remote from the stationary support (13), forms a first seal (11) with the underside of the floorboard (4).

4. Loading device according to Claim 2 or 3, in which sides (20) of the splash guard (17) form second seals (19) with the floorboard (4).

5. Loading device according to Claim 2, 3 or 4, in which the length of the splash guard (17) is approximately equal to the distance (s).

6. Loading device according to one of Claims 2-5, in which the stationary support (13) is combined with the associated splash guard (17) to form a plastic component.

7. Loading device according to one of the preceding claims, in which a plastic profiled section (24,32) is attached to the stationary supports (23,37) in the longitudinal direction of the loading platform (3) and the contact plane (14;33) is formed by the upper plane of the plastic profiled section.

8. Loading device according to one of the preceding claims, in which a metal profiled section (23) is fitted as stationary support in the longitudinal direction of the loading container (3), the metal profiled section comprising a plastic profiled section (24), and the contact plane (14) is formed by the upper plane of the plastic profiled section (24).

9. Loading device according to Claim 7 or 8, in which the sides of the plastic profiled section (32) are provided with sealing lips (35) for sealing and/or guidance against the floorboard (4).

10. Loading device according to Claim 7, 8 or 9, in which the plastic profiled section (32) is attached to the stationary supports (37) by means of screws (34.) fitted on the side.

11. Loading device according to one of the preceding claims, in which a number of stationary supports (13;37) are combined to form a plastic component (21) which can be mounted on a crossbeam (6).

12. Loading device according to one of the preceding claims, in which the stationary supports (13;37) or the plastic component (21) are made from plastic having a more or less constant wall thickness.

13. Loading device according to one of the preceding claims, in which the stationary supports (13;37) or the plastic component (21) are provided with apertures having parallel walls.
